# EUROPEAN PATENT APPLICATION

(11) **EP 3 522 600 A1**
(43) Date of publication of application: **07.08.2019**
(21) Application number: 18174399.8
(22) Date of filing: 25.05.2018
(51) Int. Cl.: H04W 36/08, H04W 36/30, H04W 84/12, H04W 88/06, H04W 88/10

(54) **SWITCHING OF WIRELESS LINK TO NEIGHBOR DEVICE**

(30) Priority: 31.01.2018 CN 201810096063
(71) Applicant: Hewlett Packard Enterprise Development LP, Houston, TX 77070 (US)
(72) Inventor: HAN, Jianpo, Beijing, Beijing 100027 (CN); ZHOU, Qiang, Beijing, Beijing 100027 (CN); RAN, Guangzhi, Beijing, Beijing 100027 (CN)
(74) Representative: Haseltine Lake Kempner LLP

(57) **Abstract**

In one example in accordance with the present disclosure, a network device may include a processor to announce radio information of the network device and neighbor network devices adjacent to a client device; to establish a first wireless link operating on a first frequency band and a second wireless link operating on a second frequency band between the network device and the client device; and, to cause the client device to switch the second wireless link from the network device to a neighbor network device, while the first wireless link connected to the network device being active.

## Description

### BACKGROUND

A client device may connect to an access point (AP) by links in different frequency bands, and the session of the client device may be transferred between the links connected to that AP. The links between the client device and that AP may be down, when the client device connects to the other AP, and new links are to be established between the client device and the other AP.

### BRIEF DESCRIPTION OF THE DRAWINGS

FIG. 1 is a block diagram illustrating an example wireless system according to present disclosure;
FIG. 2 is a diagram illustrating an example of transferring session between different wireless network devices in the example wireless system according to present disclosure;
FIG. 3 is a diagram illustrating an example case of collecting radio information in the example wireless system according to present disclosure;
FIG. 4 is a diagram illustrating an example case of announcing radio information in the example wireless system according to present disclosure;
FIG. 5a to FIG. 5e show an example case of session in the example wireless system according to present disclosure;
FIG. 6 is a flow chart illustrating an example method of supporting session transfer between different wireless network devices according to present disclosure;
FIG. 7 is a flow chart illustrating another example method of supporting session transfer between different wireless network devices according to present disclosure;
FIG. 8 is a flow chart illustrating another example method of supporting session transfer between different wireless network devices according to present disclosure;
FIG. 9 is a block diagram illustrating an example wireless network device shown in FIG. 1 according to present disclosure;
FIG. 10 is a block diagram illustrating another example wireless network device shown in FIG. 1 according to present disclosure;
FIG. 11 is a block diagram illustrating another example wireless network device shown in FIG. 1 according to present disclosure.

### DETAILED DESCRIPTION

The links in different frequency bands are provided for a client device to connect to a wireless network device, e.g. an access point (AP), and the session of the client device may be transferred by the client device from the link in one frequency band to the link in another frequency band according to the link qualities, such that the session may be transmitted over the other link with better link quality.

If the link qualities of the links in various frequency bands degrade, the client device may choose to connect to the other wireless network device that is capable of providing the better link quality for the session. Before connecting to the other wireless network device, the client device may disconnect from the wireless network device with the degrading links. As a result, the session of the client device may be interrupted.

In order to provide a better link quality without interrupting the session, the session may be transferred seamlessly between the links connected to different wireless network devices.

The wireless network device may announce the radio information of its own and the radio information of other wireless network devices. Based on the announced radio information, the client device may connect to the wireless network device over a wireless link in a different frequency band. Specifically, the client device may store other wireless network devices as backup options without immediately connecting to those wireless network devices.

The session of the client device may be connected over the link in one frequency band, that link may be regarded as an active link; meanwhile, the link in the other one frequency band may be regarded as a backup link, and may be switched from the wireless network device to one of other wireless network devices recognized by the client device.

If the active link that the client device used to connect to the wireless network device degrades, the user session may be transferred by the client device to a backup link by switching to connect to one of the other wireless network devices, such that better link quality can be provided for the session by one of the other wireless network devices without interrupting the session.

In other words, the user session may be transferred between different wireless network devices, based on switching a subset of the links from one of the wireless network devices to one of the other wireless network devices.

In one example, a network device comprising a processor to announce radio information of the network device and neighbor network devices adjacent to a client device; to establish a first wireless link operating on a first frequency band and a second wireless link operating on a second frequency band between the network device and the client device; to cause the client device to switch the second wireless link from the network device to a neighbor network device, while the first wireless link connected to the network device being active. In another example, the processor may be further to inactivate the first wireless link connected to the network device after the client device transfers the session from the first wireless link connected to the network device to the second wireless link connected to the neighbor network device.

In another example, a method comprising: announcing, by a network device, radio information of the network device and neighbor network devices adjacent to a client device; establishing, by the network device, a first wireless link operating on a first frequency band and a second wireless link operating on a second frequency band between the network device and the client device; and, causing, by the network device, the client device to switch the second wireless link from the network device to a neighbor network device, while the first wireless link connected to the network device being active. In another example, the method may further comprising: inactivating, by the network device, the first wireless link connected to the network device after the client device transfers the session from the first wireless link connected to the network device to the second wireless link connected to the neighbor network device. In one example, the first frequency band is one of 2.4GHz, 5GHz and 60GHz bands, and the second frequency band is the other one of 2.4GHz, 5GHz and 60GHz bands.

In another example, a non-transitory computer readable storage medium stores instructions that, when executed by a processor of a network device, causes the processor to: announce radio information of the network device and neighbor network devices adjacent to a client device; establish a first wireless link operating on a first frequency band and a second wireless link operating on a second frequency band between the network device and the client device; cause the client device to switch the second wireless link from the network device to a neighbor network device, while the first wireless link connected to the network device being active. In some examples, the instructions, when executed by a processor of a network device, may further cause the processor to: inactivate the first wireless link connected to the device after the client device transfers the session from the first wireless link connected to the network device to the second wireless link connected to the neighbor network device. In some examples, the instructions, when executed by the processor, may further cause the processor to: collect the radio information of the neighbor network devices by scanning in sectors of the network device. In some example, the radio information of the network device and neighbor network devices is announced in beacon transmission interval (BTI) of beacon header interval (BHI) in beacon interval (BI), the BTI includes directional multi-Gigabit (DMG) beacons in the sectors of the network device, and the radio information of the neighbor network device scanned in the sector is included in the DMG beacons in the sectors together with the radio information of the network device. In some examples, the instructions, when executed by the processor, may further cause the processor to: detect degradation of the first wireless link to trigger the switching; detect a position and a moving direction of the client device, and determine one of the neighbor network devices for switching, based on the position and the moving direction of the client device.

As used herein, a "network device" generally includes a device that is adapted to transmit and/or receive signaling and to process information within such signaling and to provide wireless local area network services to a station (e.g., any data processing equipment such as a computer, cellular phone, personal digital assistant, tablet devices, etc.). The "network device" may include access points, data transfer devices, network switches, routers, controllers, etc. As used herein, an "access point" (AP) generally refers to receiving points for any known or convenient wireless access technology which may later become known. Specifically, the term AP is not intended to be limited to IEEE 802.11-based APs. APs generally function as an electronic device that is adapted to allow wireless devices to connect to a wired network via various communications standards.

It is appreciated that examples described herein below may include various components and features. Some of the components and features may be removed and/or modified without departing from a scope of the device, method and non-transitory computer readable storage medium. It is also appreciated that, in the following description, numerous specific details are set forth to provide a thorough understanding of the examples. However, it is appreciated that the examples may be practiced without limitations to these specific details. In other instances, well known methods and structures may not be described in detail to avoid unnecessarily obscuring the description of the examples. Also, the examples may be used in combination with each other.

Reference in the specification to "an example" or similar language means that a particular feature, structure, or characteristic described in connection with the example is included in at least one example, but not necessarily in other examples. The various instances of the phrase "in one example" or similar phrases in various places in the specification are not necessarily all referring to the same example. As used herein, a component is a combination of hardware and software executing on that hardware to provide a given functionality.

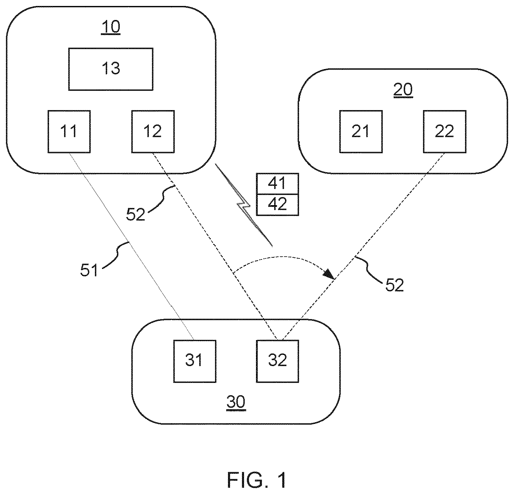

FIG. 1 is a block diagram illustrating an example wireless system according to present disclosure. Referring to FIG.1, a wireless system, e.g. a wireless local area networks (WLAN), comprises a network device 10, at least one neighbor network device 20 and a client device 30.

The network device 10 and the neighbor network device 20 may be APs or any other network devices capable of transmitting wireless transmissions to and receiving wireless transmissions from the client device 30.

The client device 30 may be a smartphone, a mobile phone, a Personal Digital Assistant (PDA), a portable personal computer, an AIO (all-in-one) computing device, a notebook, a convertible or hybrid notebook, a netbook, a tablet, a cellular device, a desktop computer, a multimedia player, an entertainment unit, a data communication device, a portable reading device, or any other computing device capable of transmitting and receiving wireless transmissions.

The network device 10 may include a first radio 11 operating on a first frequency band, a second radio 12 operating on a second frequency band, and a processor 13. The neighbor network device 20 may include a first radio 21 operating on the first frequency band and a second radio 22 operating on the second frequency band. The client device 30 may include a first radio 31 operating on the first frequency band and a second radio 32 operating on the second frequency band.

In one example, the first frequency band may be one of 2.4GHz, 5GHz and 60GHz bands, and the second frequency band may be the other one of 2.4GHz, 5GHz and 60GHz band. For example, the first frequency band may be 2.4GHz or 5GHz band, and the second frequency band may be 60GHz band; or, the first frequency band may be 2.4GHz band, and the second frequency band may be 5GHz or 60GHz band, etc..

The processor 13 of the network device 10 may announce the radio information 41 of the network device 10 and the radio information 42 of the neighbor network device 20 adjacent to a client device, e.g., the client device 30, within its wireless radio frequency (RF) neighborhood. The processor 13 of network device 10 may also collect the radio information 42, e.g. by scanning in sectors of the network device. The network device 10 may include directional antennas, and the areas covered by signals of the directional antennas may be geographically divided in various sectors on different directions.

The network device may determine that a particular one of the neighbor network devices scanned in the sectors is closer to the client device than other scanned neighbor network devices. The network device can then include the particular neighbor network device in the announced information. In some examples, the particular neighbor network device is scanned in the same sector as the sector of the client device. In other examples, the particular neighbor network device is scanned in the section geographically adjacent to the sector of the client device.

In some examples, the radio information 41 of the network device 10 and the radio information 42 of the neighbor network devices 20 may be announced in beacon transmission interval (BTI) of beacon header interval (BHI) in beacon interval (BI). The BTI may include directional multi-Gigabit (DMG) beacons in the sectors of the network device, and the DMG beacons in each of the sectors includes the radio information of the network device and the radio information of the neighbor network device scanned in that sector.

The client device 30 may recognize the DMG beacon in the sector that the client device 30 is positioned in, and read the radio information 41 and 42 of a multi-device set including the network device 10 and the neighbor network device 20. However, the client device 30 may not distinguish the network device 10 and the neighbor network device 20 from each other based on the radio information. The multi-device set including the network device 10 and the neighbor network device 20 may be regarded as a virtual device by the client device 30.

Based on the announced radio information 41 and 42, the client device 30 may choose a network device between the network device 10 and the neighbor network device 20 to be connected with.

The processor 13 of network device 10 may establish a first wireless link 51 operating on a first frequency band and a second wireless link 52 operating on a second frequency band between the network device 10 and the client device 30, in the case of the client device 30 connecting to the network device 10. The first wireless link 51 may be connected between the first radio 31 of the client device 30 and the first radio 11 of the network device 10, and the second wireless link 52 may be connected between the second radio 32 of the client device 30 and the second radio 12 of the network device 10.

The user session corresponding to the client device 30 may be connected to the network device 10 over one of the first wireless link 51 and the second wireless link 52. When the link quality of one link (e.g., the first wireless link 51 operating on the first frequency band) degrades, and becomes worse than the link quality of the other one (e.g., the second wireless link 52 operating on the second frequency band), the user session may be transferred, e.g. by a seamless transfer such as fast session transfer (FST), from the first wireless link 51 to the second wireless link 52.

FIG.1 shows an example of the user session being connected over one of the first wireless link 51 operating on the first frequency band. In FIG.1, the first wireless link 51 is shown as a solid line, and the second wireless link 52 is shown as a dotted line. In this example, the first wireless link 51 operates on a first wireless frequency band, and the second wireless link 52 operates on a second and different wireless frequency band.

The processor 13 of network device 10 may cause the client device 30 to switch the second wireless link 52 from the network device 10 to the neighbor network device 20, while the first wireless link 51 connected to the network device 10 being active. In this case, the user session may be connected over the first wireless link 51. Similarly, if the second wireless link 52 connected to the network device 10 is active and the user session is connected over the second wireless link 52 connected to the network device 10, the first wireless link 51 may be also switched from the network device 10 to the neighbor network device 20 by the processor 13 of network device 10. After the operation of switching, the second wireless link 52 may be connected between the second radio 32 of the client device 30 and the second radio 22 of the neighbor network device 20.

In one example, the operation of switching the second wireless link 52 may be executed when processor 13 detects the degradation of the first wireless link 51, or the degradations of the first wireless link 51 and the second wireless link 51.

In another example, the system may include at least two neighbor network devices, whose radio information can be announced by the processor 13, the processor 13 may further detect a position and a moving direction of the client device 30, and select a target network device among the at least two neighbor network devices for switching, based on the position and the moving direction of the client device 30.

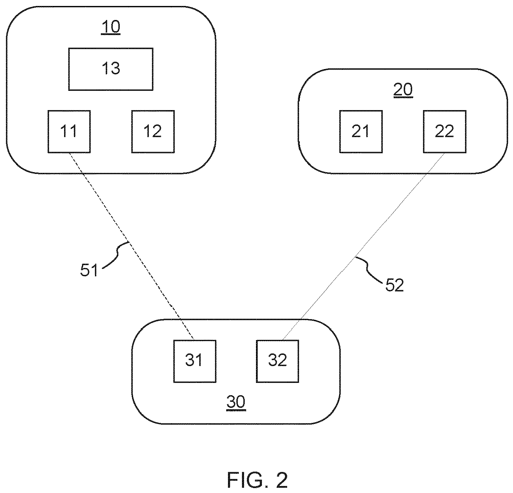

FIG. 2 is a diagram illustrating an example of transferring session between different wireless network devices in the example wireless system according to present disclosure.

Referring to FIG.2, after switching the second wireless link 52 from the network device 10 to the neighbor network device 20, the processor 13 of network device 10 may inactivate the first wireless link 51 connected to the network device 10 when the client device 30 transfers, e.g. by a seamless transfer such as fast session transfer (FST), the session from the first wireless link 51 connected to the network device 10 to the second wireless link 52 connected to the neighbor network device 20. Meanwhile, the second wireless link 52 connected to the neighbor network device 20 may be activated by neighbor network device 20 due to the transfer of the session, i.e. the transferring of the session shown in FIG.2 may be a cross-device FST. In FIG.2, the first wireless link 51 is shown as a dot line, and the second wireless link 52, over which the session is connected, is shown as a full line.

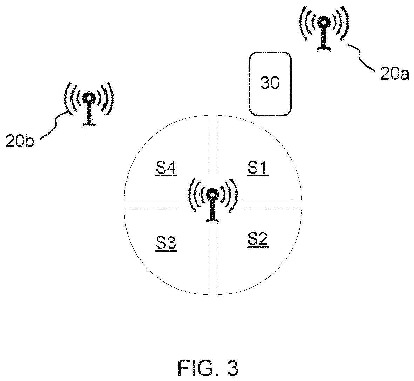

FIG. 3 is a diagram illustrating an example case of collecting radio information in the example wireless system according to present disclosure.

Referring to FIG.3, a wireless system comprises a network device 10, a client device 30, and neighbor network devices 20a and 20b nearby the client device 30.

The network device 10 may have a multiple directional antenna system, including four sectors S1, S2, S3 and S4. By scanning utilizing the multiple directional antenna system, the network device 10 may detect multiple wireless devices in different sectors and collect their radio information. For example, the neighbor network device 20a nearby the client device 30 may be detected in sector S1, and the neighbor network device 20b nearby the client device 30 may be detected in sector S4.

The radio information of the detected neighbor network devices 20a and 20b can be collected by the network device 10. The radio information of the neighbor network devices 20a and 20b nearby the client device 30 may be announced together with the information of the network device 10.

If other neighbor network devices located far from the client device 30 may be scanned in sectors S2 or S3, the information of those neighbor network devices may not be announced by network device 10 because of their physical distances to the client device 30.

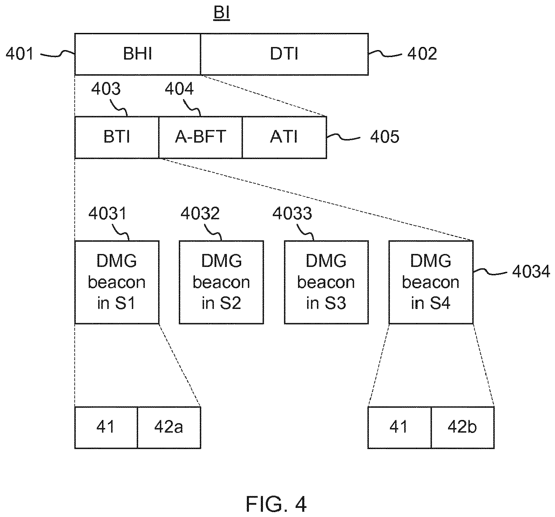

FIG. 4 is a diagram illustrating an example case of announcing radio information in the example wireless system according to present disclosure.

Referring to FIG.4, in IEEE 802.11 standard, beacon interval (BI) includes beacon header interval (BHI) 401 and data transmission interval (DTI) 402. The BHI 401 includes beacon transmission interval (BTI) 403, association beamforming training (A-BFT) 404 and announcement time interval (ATI) 405. In BTI 403, directional multi-Gigabit (DMG) beacons 4031, 4032, 4033 and 4034 may be sent in each of the sectors S1, S2, S3 and S4, respectively.

The network device 10 may announce the radio information of the network device 10 and the neighbor network devices 20a and 20b by sending DMG beacons 4031, 4032, 4033 and 4034 in the sectors S1, S2, S3 and S4. In FIG4, the DMG beacon 4031 sent in the sector S1 includes the radio information 41 of the network device 10 and the radio information 42a of the neighbor network devices 20a detected by the network device 10 in the sector S1, the DMG beacon 4034 sent in the sector S4 includes the radio information 41 of the network device 10 and the radio information 42b of the neighbor network devices 20b detected by the network device 10 in the sector S4.

The information element (IE) in BTI may be multi-band IE, e.g. the radio information 41, 42a and 42b may be the radio information using multi-band IE, and the basic serve set (BSS) IDs of the network device 10 and the neighbor network devices 20a and 20b may use multi-band IE. Due to the BSS IDs in multi-band IE of the network device 10 and the neighbor network device 20a and 20b, the client device 30 may consider the network device 10 and the neighbor network device 20a and 20b to be the candidate network device to connect.

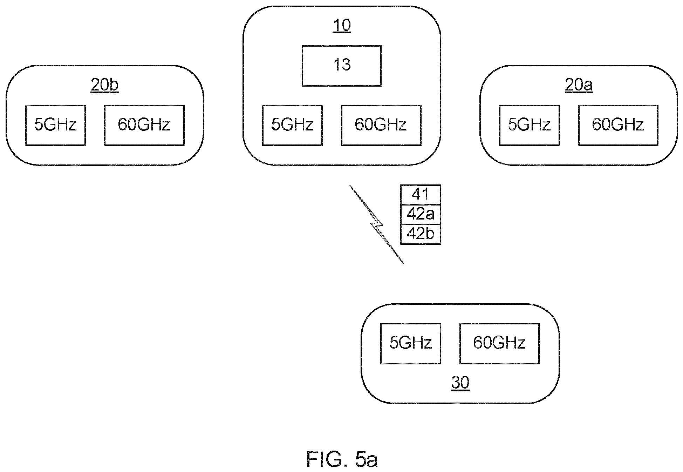

FIG. 5a to FIG. 5e show an example case of session in the example wireless system according to present disclosure. In the example shown in FIG.5a to FIG. 5e, the network device 10, the neighbor network devices 20a and 20b, and the client device 30 may each include a 5GHz band radio and a 60GHz band radio.

Referring to FIG.5a, the processor 13 of the network device 10 may announce the radio information 41 using multi-band IE of the network device 10 and the collected radio information 42a and 42b using multi-band IE of the neighbor network devices 20a and 20b, together with BSSIDs (not shown) using multi-band IE of the network device 10 and the neighbor network devices 20a and 20b.

The client device 30 may consider the network device 10 and the neighbor network devices 20a and 20b as candidate devices to connect, due to the BSSIDs using multi-band IE. Based on the announced radio information 41, 42a and 42b, the client device 30 may choose a device to be connected from the network device 10 and the neighbor network devices 20a and 20b.

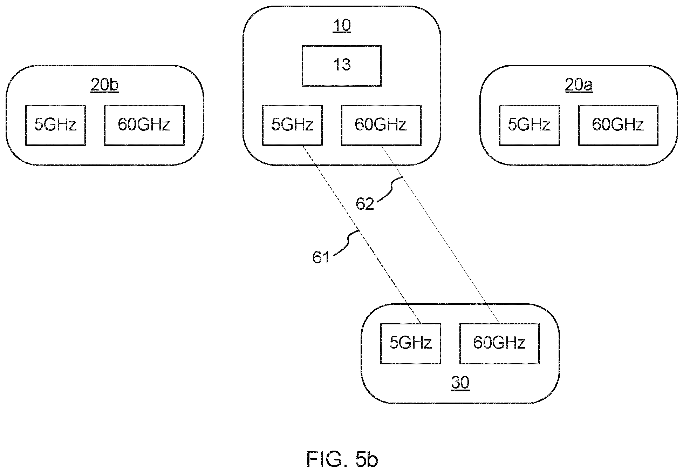

Referring to FIG.5b, the client device 30 connect to the network device 10, and the processor 13 of the network device 10 may establish a 5GHz band link 61 and a 60GHz band link 62 between the network device 10 and the client device 30, and the user session may be transmitted over the 60GHz band link 62.

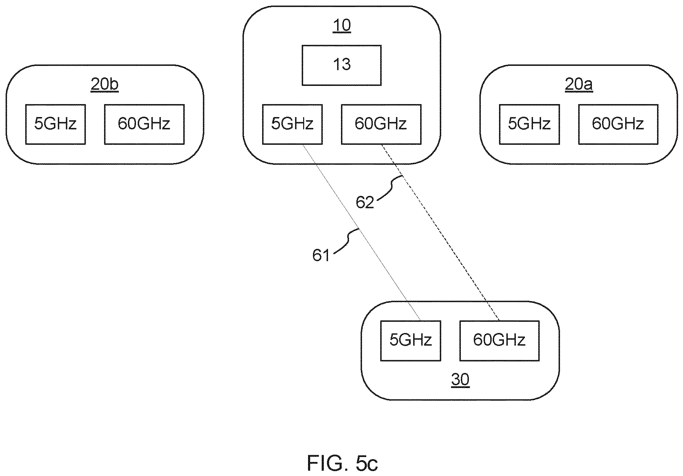

Referring to FIG.5c, when the link quality of the 60GHz band link 62 connected to the network device 10 degrades and is worse than that of the 5GHz band link 61 connected to the network device 10, the client device 30 may transfer the user session from the 60GHz band link 62 connected to the network device 10 to the 5GHz band link 61 connected to the network device 10.

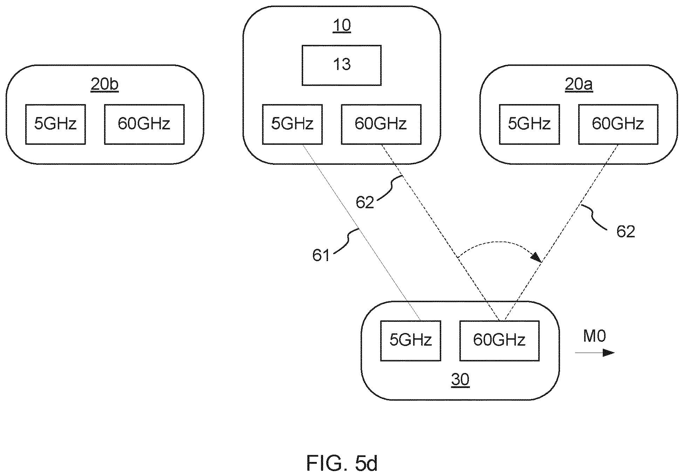

Referring to FIG.5d, when the client device 30 moves close to the neighbor network device 20a, the processor 13 of the network device 10 may detect the degradation of the 5GHz band link 61 and the 60GHz band link 62 connected to the network device 10, and select the neighbor network device 20a as a target device by referring the position and the moving direction M0 of the client device 30, and cause the client device 30 to switch the 60GHz band link 62 from the network device 10 to the neighbor network device 20a, during the user session being transmitted over the 5GHz band link 61 connected to the network device 10.

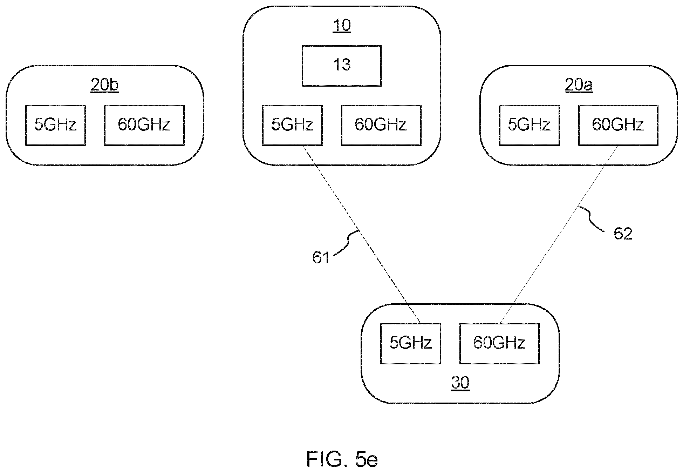

Referring to FIG.5e, after the operation of switching, the 60GHz band link 62 may be connected between the client device 30 and the neighbor network device 20a, and the link quality of the 60GHz band link 62 may change to be better than that of the 5GHz band link 61 connected between the client device 30 and the network device 10. In this case, the session may be transferred by the client device 30 from the 5GHz band link 61 connected to the network device 10 to the 60GHz band link 62 connected to the neighbor network device 20a.

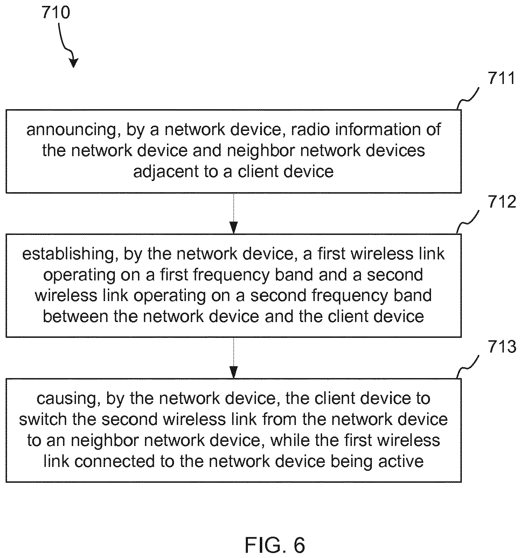

FIG. 6 is a flow chart illustrating an example method of supporting session transfer between different wireless network devices according to present disclosure. Referring to FIG. 6:

The method 710 comprises announcing, by a network device, radio information of the network device and neighbor network devices adjacent to a client device, at 711.

In an example, the radio information of the neighbor network devices may be collected, e.g. by scanning in sectors of the network device. In this case, the neighbor network device closer to the client device than other scanned neighbor network devices may be included in the radio information.

The radio information of the network device and the neighbor network devices may be announced in beacon transmission interval (BTI) of beacon header interval (BHI) in beacon interval (BI), the BTI includes DMG beacons in the sectors of the network device, and the DMG beacons in each of the sectors includes the radio information of the network device and the radio information of the neighbor network device scanned in that sector. The client device may read the radio information of a multi-device set including the network device and the neighbor network devices. The multi-device set including the network device and the neighbor network device may be regarded as a virtual device by the client device.

The method 710 comprises establishing, by the network device, a first wireless link operating on a first frequency band and a second wireless link operating on a second frequency band between the network device and the client device, at 712.

The method 710 comprises causing, by the network device, the client device to switch the second wireless link from the network device to an neighbor network device, while the first wireless link connected to the network device being active, at 713.

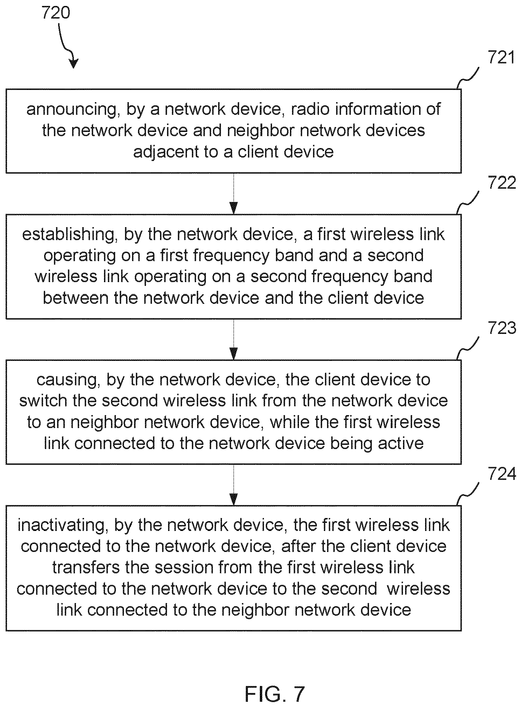

FIG. 7 is a flow chart illustrating another example method of supporting session transfer between different wireless network devices according to present disclosure. Referring to FIG. 7:

The method 720 comprises announcing, by a network device, radio information of the network device and neighbor network devices adjacent to a client device, at 721.

In an example, the radio information of the neighbor network devices may be collected, e.g. by scanning in sectors of the network device. In this case, the neighbor network device closer to the client device than other scanned neighbor network devices may be included in the radio information.

The radio information of the network device and the neighbor network devices may be announced in beacon transmission interval (BTI) of beacon header interval (BHI) in beacon interval (BI), the BTI includes DMG beacons in the sectors of the network device, and the DMG beacons in each of the sectors includes the radio information of the network device and the radio information of the neighbor network device scanned in that sector. The client device may read the radio information of a multi-device set including the network device and the neighbor network devices. The multi-device set including the network device and the neighbor network device may be regarded as a virtual device by the client device.

The method 720 comprises establishing, by the network device, a first wireless link operating on a first frequency band and a second wireless link operating on a second frequency band between the network device and the client device, at 722.

The method 720 comprises causing, by the network device, the client device to switch the second wireless link from the network device to a neighbor network device, while the first wireless link connected to the network device being active, at 723.

The method 720 comprises inactivating, by the network device, the first wireless link connected to the network device, after the client device transfers the session from the first wireless link connected to the network device to the second wireless link connected to the neighbor network device, at 724.

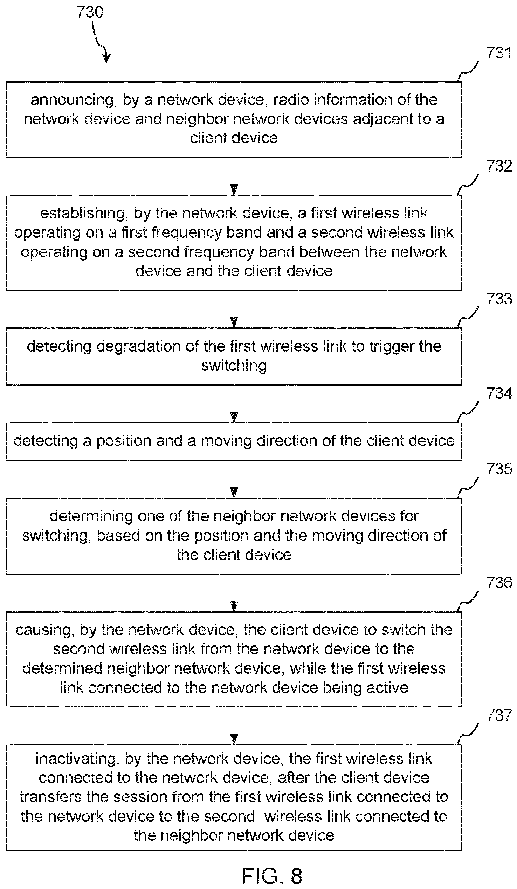

FIG. 8 is a flow chart illustrating another example method of supporting session transfer between different wireless network devices according to present disclosure. Referring to FIG. 8:

The method 730 comprises announcing, by a network device, radio information of the network device and neighbor network devices adjacent to a client device, at 731.

In an example, the radio information of the neighbor network devices may be collected, e.g. by scanning in sectors of the network device, and the neighbor network device. In this case, the neighbor network device closer to the client device than other scanned neighbor network devices may be included in the radio information.

The radio information of the network device and the neighbor network devices may be announced in beacon transmission interval (BTI) of beacon header interval (BHI) in beacon interval (BI), the BTI includes DMG beacons in the sectors of the network device, and the DMG beacons in each of the sectors includes the radio information of the network device and the radio information of the neighbor network device scanned in that sector. The client device may read the radio information of a multi-device set including the network device and the neighbor network devices. The multi-device set including the network device and the neighbor network device may be regarded as a virtual device by the client device.

The method 730 comprises establishing, by the network device, a first wireless link operating on a first frequency band and a second wireless link operating on a second frequency band between the network device and the client device, at 732.

The method 730 comprises detecting, by the network device, degradation of the first wireless link to trigger the switching, at 733. The method 730 may further comprise detecting degradation of the second wireless link at 733.

The method 730 comprises detecting, by the network device, a position and a moving direction of the client device, at 734.

The method 730 comprises determining, by the network device, one of the neighbor network devices for switching, based on the position and the moving direction of the client device, at 735.

The method 730 comprises causing, by the network device, the client device to switch the second wireless link from the network device to the determined neighbor network device, while the first wireless link connected to the network device being active, at 736.

The method 730 comprises inactivating, by the network device, the first wireless link connected to the network device, after the client device transfers the session from the first wireless link connected to the network device to the second wireless link connected to the neighbor network device, at 737.

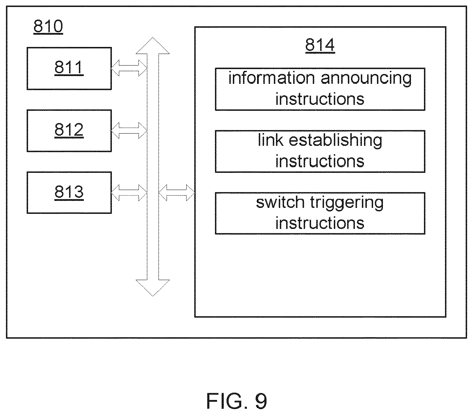

FIG. 9 is a block diagram illustrating an example wireless device, e.g., the network device 10 such as an AP, shown in FIG. 1 according to present disclosure.

The network device 810 includes a first radio 811 operating on a first frequency band, a second radio 812 operating on a second frequency band, a processor 813 and a non-transitory computer readable storage medium 814.

The non-transitory computer readable storage medium 814 stores instructions executable for the possessor 813.

The instructions include information announcing instructions that, when executed by the processor 813, cause the processor 813 to announce radio information of the network device and neighbor network devices adjacent to a client device.

The instructions include link establishing instructions that, when executed by the processor 813, cause the processor 813 to establish a first wireless link operating on a first frequency band and a second wireless link operating on a second frequency band between the network device and the client device.

The instructions include switch triggering instructions that, when executed by the processor 813, cause the processor 813 to cause the client device to switch the second wireless link from the network device to an neighbor network device, while the first wireless link connected to the network device being active.

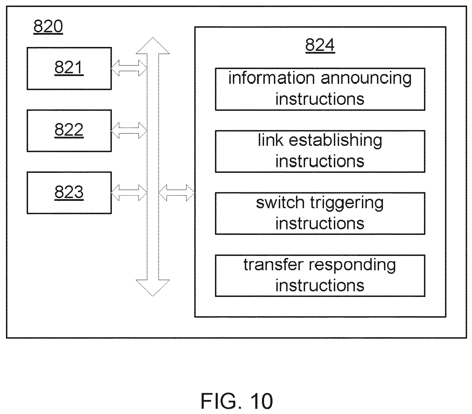

FIG. 10 is a block diagram illustrating another example network device, e.g., network device 10 such as an AP, shown in FIG. 1 according to present disclosure.

The network device 820 includes a first radio 821 operating on a first frequency band, a second radio 822 operating on a second frequency band, a processor 823 and a non-transitory computer readable storage medium 824.

The non-transitory computer readable storage medium 824 stores instructions executable for the possessor 823.

The instructions include information announcing instructions that, when executed by the processor 823, cause the processor 823 to announce radio information of the network device and neighbor network devices adjacent to a client device.

The instructions include link establishing instructions that, when executed by the processor 823, cause the processor 823 to establish a first wireless link operating on a first frequency band and a second wireless link operating on a second frequency band between the network device and the client device.

The instructions include switch triggering instructions that, when executed by the processor 823, cause the processor 823 to cause the client device to switch the second wireless link from the network device to an neighbor network device, while the first wireless link connected to the network device being active.

The instructions include transfer responding instructions that, when executed by the processor 823, cause the processor 823 to inactivate the first wireless link connected to the network device after the client device transfers the session from the first wireless link connected to the network device to the second wireless link connected to the neighbor network device.

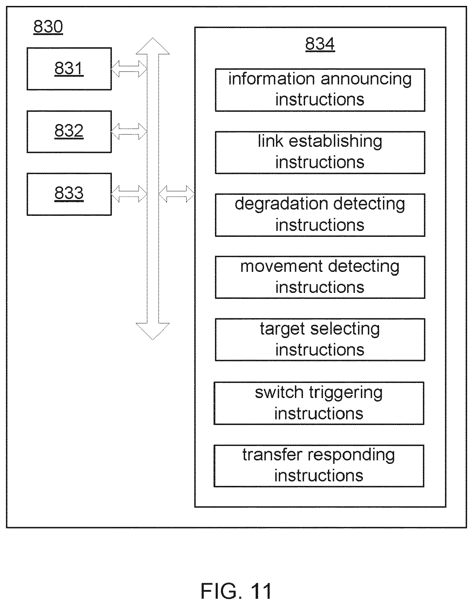

FIG. 11 is a block diagram illustrating another example network device, e.g., network device 10 such as an AP, shown in FIG. 1 according to present disclosure.

The network device 830 includes a first radio 831 operating on a first frequency band, a second radio 832 operating on a second frequency band, a processor 833 and a non-transitory computer readable storage medium 834.

The non-transitory computer readable storage medium 834 stores instructions executable for the possessor 833.

The instructions include information announcing instructions that, when executed by the processor 833, cause the processor 833 to announce radio information of the network device and neighbor network devices adjacent to a client device.

The instructions include link establishing instructions that, when executed by the processor 833, cause the processor 833 to establish a first wireless link operating on a first frequency band and a second wireless link operating on a second frequency band between the network device and the client device.

The instructions include degradation detecting instructions that, when executed by the processor 833, cause the processor 833 to detect degradation of the first wireless link to trigger the switching. The processor 833 executing the degradation detecting instructions may further detect degradation of the second wireless link.

The instructions include movement detecting instructions that, when executed by the processor 833, cause the processor 833 to detect a position and a moving direction of the client device.

The instructions include target selecting instructions that, when executed by the processor 833, cause the processor 833 to determine one of the neighbor network devices for switching, based on the position and the moving direction of the client device.

The instructions include switch triggering instructions that, when executed by the processor 833, cause the processor 833 to cause the client device to switch the second wireless link from the network device to the determined neighbor network device, while the first wireless link connected to the network device being active.

The instructions include transfer responding instructions that, when executed by the processor 833, cause the processor 833 to inactivate the first wireless link connected to the network device after the client device transfers the session from the first wireless link connected to the network device to the second wireless link connected to the neighbor network device.

While the present disclosure has been described in connection with certain example embodiments, it is to be understood that the disclosure is not limited to the disclosed embodiments, but, on the contrary, is intended to cover various modifications and equivalent arrangements included within the spirit and scope of the appended claims, and equivalents thereof.

## Claims

1. A network device comprising a processor to:
announce radio information of the network device and neighbor network devices adjacent to a client device;
establish a first wireless link operating on a first frequency band and a second wireless link operating on a second frequency band between the network device and the client device; and
cause the client device to switch the second wireless link from the network device to a neighbor network device, while the first wireless link connected to the network device being active.

2. The network device of claim 1, wherein the processor is further to: inactivate the first wireless link connected to the network device, after the client device transfers the session from the first wireless link connected to the network device to the second wireless link connected to the neighbor network device.

3. The network device of claim 1, wherein the processor is further to:
collect the radio information of the neighbor network devices by scanning in sectors of the network device.

4. The network device of claim 3, wherein the radio information of the network device and neighbor network devices is announced in beacon transmission interval (BTI) of beacon header interval (BHI) in beacon interval (BI), the BTI includes directional multi-Gigabit (DMG) beacons in the sectors of the network device, and the radio information of the neighbor network device scanned in the sector is included in the DMG beacons in the sectors together with the radio information of the network device.

5. The network device of claim 1, wherein the processor is further to:
detect degradation of the first wireless link to trigger the switching.

6. The network device of claim 1, wherein the processor is further to:
detect a position and a moving direction of the client device, and
determine one of the neighbor network devices for switching, based on the position and the moving direction of the client device.

7. The network device of claim 1, wherein the first frequency band is one of 2.4GHz, 5GHz and 60GHz bands, and the second frequency band is the other one of 2.4GHz, 5GHz and 60GHz bands.

8. The network device of claim 1, wherein the network device comprises an access point (AP), and the neighbor network devices comprise other APs.

9. A method comprising:
announcing, by a network device, radio information of the network device and neighbor network devices adjacent to a client device;
establishing, by the network device, a first wireless link operating on a first frequency band and a second wireless link operating on a second frequency band between the network device and the client device; and
causing, by the network device, the client device to switch the second wireless link from the network device to an neighbor network device, while the first wireless link connected to the network device being active.

10. The method of claim 9, further comprising:
inactivating, by the network device, the first wireless link connected to the network device, after the client device transfers the session from the first wireless link connected to the network device to the second wireless link connected to the neighbor network device.

11. The method of claim 9, further comprising:
collecting, by the network device, the radio information of the neighbor network devices by scanning in sectors of the network device.

12. The method of claim 11, wherein the radio information of the network device and neighbor network devices is announced in beacon transmission interval (BTI) of beacon header interval (BHI) in beacon interval (BI), the BTI includes directional multi-Gigabit (DMG) beacons in the sectors of the network device, and the radio information of the neighbor network device scanned in the sector is included in the DMG beacons in the sectors together with the radio information of the network device.

13. The method of claim 9, further comprising at least one of:
(i) detecting, by the network device, degradation of the first wireless link to trigger the switching; and
(ii) detecting, by the network device, a position and a moving direction of the client device, and determining, by the network device, one of the neighbor network devices for switching, based on the position and the moving direction of the client device.

14. A non-transitory computer readable storage medium storing instructions that, when executed by a processor of a network device, cause the processor to:
announce radio information of the network device and neighbor network devices adjacent to a client device;
establish a first wireless link operating on a first frequency band and a second wireless link operating on a second frequency band between the network device and the client device; and
cause the client device to switch the second wireless link from the network device to an neighbor network device, while the first wireless link connected to the network device being active.

15. The non-transitory computer readable storage medium of claim 14, the instructions, when executed by the processor, further causing the processor to carry out the method of any of claim 10 to 13.
